# EUROPEAN PATENT APPLICATION

(11) **EP 3 109 817 A1**
(43) Date of publication of application: **28.12.2016**
(21) Application number: 15173920.8
(22) Date of filing: 25.06.2015
(51) Int. Cl.: G06Q 20/32, G06Q 20/20

(54) **SYSTEMS, METHODS, DEVICES, AND COMPUTER READABLE MEDIA FOR MONITORING PROXIMITY MOBILE PAYMENT TRANSACTIONS**

(71) Applicant: Mastercard International Incorporated, Purchase NY 10577 (US)
(72) Inventor: Phillips, Simon, York, YO30 6LN (GB)
(74) Representative: Gill Jennings & Every LLP

(57) **Abstract**

Systems, methods, devices, and computer readable media for monitoring and guiding proximity mobile payment transactions are provided. Proximity mobile payment transactions conducted at a contactless point of sale terminal using mobile devices are monitored at a backend server. The backend server receives observational data captured during and concerning such proximity mobile payment transactions and analyses the received observational data to determine one or more characteristics common to at least some of the proximity mobile payment transactions. Based on the one or more characteristics, the backend server determines whether the contactless POS functions within predetermined operational parameters and may automatically issue a request for servicing the POS terminal if it is determined that the POS is not functioning within the predetermined operational parameters.

## Description

### Field of the Invention

The present invention relates generally to transaction processing methods and associated systems. In particular, but not exclusively, the invention relates to methods and systems for monitoring proximity mobile payment transactions and assisting consumers with use of their mobile payment devices in carrying out the proximity mobile payment transactions.

### Background of the Invention

Mobile devices, such as smartphones, have become ubiquitous around the world. They provide their users with a multitude of features and capabilities, such as Internet browsing, e-mail communications, text messaging, digital imaging, gaming, video streaming, global positioning systems (GPSs), and others. More recently, users of mobile devices gained the ability to pay for transit fares, groceries, and other products and services by simply tapping or waving a mobile device near a merchant's contactless payment point-of-sale (POS) terminal (reader or the like device). Such proximity mobile payments are typically based on an NFC or other short range radio technology and generally supported by the existing infrastructure of contactless POS terminals that was originally established to support contactless credit and debit card payments.

The NFC technology is a standards-based wireless communication technology that allows devices that are a few centimetres apart to exchange data. An NFC-enabled device typically includes a smart chip (NFC secure element) and an NFC antenna embedded in the device. The smart chip stores data securely and enables a two-way exchange of data with another NFC-enabled device using a close-range communication established via the NFC antennas of the devices.

In the context of the proximity mobile payments, the smart chip of the NFC-enabled mobile device stores consumer account information together with a payment application. The payment application is a secure applet that enables a close-range communication data exchanges between the mobile device and merchant's contactless POS terminals, facilitating transfer of the consumer account data necessary to conduct the proximity mobile payment transactions.

A typical mobile proximity payment transaction is initiated either by a merchant keying in a transaction amount in a POS terminal or by a consumer via the payment application installed on the mobile device. Some payment applications that support multiple accounts (e.g., credit card accounts) allow the consumer to select an account to pay for the transaction. After the merchant and/or consumer has initiated the transaction, the consumer places the mobile device against a reader field of the POS terminal (usually not further than 10 centimetres from reader field) and holds the mobile device there for a certain period of time (e.g., a few seconds) to enable the POS terminal to read all the necessary data from the mobile device. Upon completion of the reading process, the POS terminal may provide an indication to the consumer that the process has been completed and that the device may be removed, e.g., by emitting a sound, signalling with a light, and/or by providing a message, and the like. The payment and settlement processes for the proximity mobile payment transactions are generally the same as for the contactless credit and debit card payment transactions.

The proximity mobile payments can be made at both attended POS locations (such as stores) and unattended POS locations (such as transit terminals and vending machines). Similarly to the contactless credit and debit card payment transactions, for high-priced purchases or multiple purchases within a short period of time, the consumer may be asked for additional identification, such as to enter a personal identification number (PIN), to complete the mobile payment proximity transaction.

As consumers become aware of being able to use mobile devices as a payment device, NFC-enabled mobile devices become more common, and the number of banks offering the proximity mobile payment service to their consumers increases, the proximity mobile payment transactions become more widespread. Further, the market of contactless POS terminals/readers grows, including introduction of new POS terminals/readers into the market. However, many consumers do not know how to use their mobile devices properly to conduct proximity mobile payment transactions. This sometimes leads to unsuccessful payment transactions, which in turn discourage the consumers from using their mobile devices as payment devices in the future. For example, a common problem with the execution of the proximity mobile payment transactions is that a consumer removes the mobile device from the reader field of the POS terminal too quickly, preventing the POS terminal from reading all the necessary data, and thereby causing an unsuccessful payment transaction.

However, the consumer often remains unaware of the real reason for the transaction failure, such as whether the failure was caused by a faulty terminal or because the consumer did not use the mobile device properly. The payment service providers (e.g., MasterCard, banks, and other financial institutions) may also not be able to distinguish between the payment transactions that failed due to an improper use of a mobile device by a consumer and the payment transactions that failed due to a faulty or inadequate POS terminal. Even when a particular POS terminal is at an attended location, problems with the terminal's functionality may remain unnoticed, and thus unreported, for a substantial period of time. Further, the variety of POS terminals/readers used by merchants, and particularly, the constant addition of new models/types of POS terminals/readers to the market, makes it even harder for the payment service providers and/or other involved entities to conduct the quality control of their services and/or detect faulty and inadequate POS terminals/readers in the market.

There is therefore a need to enable monitoring proximity mobile payment transactions automatically and remotely. There is a further need for a mechanism for detecting faulty and inadequate POS terminals/readers automatically, accurately, and promptly. There is also a need for a method and system for assisting consumers with carrying out proximity mobile payment transactions such as to enable the consumers to use their mobile payment devices properly during those proximity mobile payment transactions.

### Summary of the Invention

Methods, systems, devices, and computer readable media for monitoring proximity mobile payment transactions are disclosed. The disclosed methods, systems, devices, and computer readable media, and the principles and techniques in general, enable monitoring of the proximity mobile payment transactions automatically and remotely. They provide a mechanism for detecting faulty and inadequate POS terminals/readers automatically, accurately, and promptly. Further, the disclosed methods, systems, devices, and computer readable media, and the principles and techniques in general, provide for automatic assistance of consumers with carrying out the proximity mobile payment transactions to ensure that the consumers use their mobile payment devices during such transactions in a proper manner.

According to a first aspect, a computer-implemented method of monitoring proximity mobile payment transactions is provided. The method comprises receiving, at a backend server, observational data concerning a plurality of proximity mobile payment transactions conducted at a contactless point of sale (POS) terminal using a plurality of mobile devices, wherein the observational data was captured during the plurality of proximity mobile payment transactions; and analysing, at the backend server, the received observational data to determine one or more characteristics common to at least some of the plurality of proximity mobile payment transactions.

In this manner, the backend server is able to monitor the proximity mobile payment transactions remotely and detect common patterns and abnormalities, which can then be analysed to detect faults with the POS terminals, common misuse of mobile devices as payment devices, and the like, and correlate such date in relation to specific models of POS terminals, models of payment devices, location of the terminal, and other reference points.

In some example embodiments, at least some of the observational data was captured by the plurality of mobile devices themselves.

In some example embodiments, at least some of the observational data was captured by one or more sensor devices co-located with the POS terminal and separately from the plurality of mobile devices.

In some example embodiments, the method further comprises determining, at the backend server, whether the POS terminal is functioning within predetermined operational parameters based on the one or more common characteristics.

In some example embodiments, the method further comprises generating automatically a request for servicing the POS terminal, if it is determined that the POS terminal is not functioning within predetermined operational parameters.

In some example embodiments, the determination as to whether the POS terminal is functioning within predetermined operational parameters is performed by comparing data associated with the analysis of the one or more characteristics to corresponding parameter data stored in a device profile associated with the POS terminal.

In some example embodiments, the one or more characteristics comprise at least one of: a presentation style of a mobile device in relation to the POS terminal; a speed with which the mobile device is moved during the proximity mobile payment transaction; a period of time during which the mobile device is held stationary next to a reader field of the POS terminal; a placement of the mobile device in relation to the POS terminal; an orientation of the mobile device during the proximity mobile payment transaction; a location of the reader field on the POS terminal; and/or an identity of the POS terminal.

In some example embodiments, the method further comprises the identity of the POS terminal comprises one or more of: an identification reference, a model, a type, an associated merchant, and a GPS location.

In some example embodiments, the method further comprises updating a device profile associated with the POS terminal based on data associated with the analysis of the one or more characteristics.

In some example embodiments, the device profile represents one of a model of the POS terminal, a type of the POS terminal, and the POS terminal itself.

In some example embodiments, the updating further comprises: comparing the data associated with the analysis of the one or more characteristics determined in association with the POS terminal with data associated with the analysis of another one or more characteristics determined in association with at least one another POS terminal to determine at least one characteristic common to proximity mobile payment transactions conducted at the POS terminal and the at least one another POS terminal; and updating the device profile based on data associated with the analysis of the at least one characteristic common to the plurality of proximity mobile payment transactions conducted at the POS terminal and the at least one another POS terminal.

In some example embodiments, the POS terminal and the at least one another POS terminal are of a same model or of a same type.

In some example embodiments, the method further comprises generating, based on the updated device profile, an update for providing to a subscribing mobile device, having a payment application installed therein for guiding a user of the subscribing mobile device on how to conduct a proximity mobile payment transaction at one or more POS terminals associated with the device profile.

In some example embodiments, the analysing comprises analysing the received observational data in conjunction with payment transaction data of the plurality of proximity mobile payment transactions.

In some example embodiments, the method further comprises, the observational data is analysed using machine vision technology.

In some example embodiments, the received observational data comprises, for each of the plurality of proximity mobile payment transactions, at least one of: one or more video frames depicting execution of the proximity mobile payment transaction; one or more still shots depicting execution of the proximity mobile payment transaction; audio data captured during the proximity mobile payment transaction; proximity data concerning proximity of the mobile device to the POS terminal; orientation data concerning an orientation of the mobile device; velocity data concerning a velocity of the mobile device during the proximity mobile payment transaction; speed data concerning a speed of the mobile device during the proximity mobile payment transactions transaction; and /or GPS data.

According to a second aspect, a computer-implemented method of monitoring proximity mobile payment transactions is provided. The method comprises receiving, at a mobile device, an instruction to initialise a proximity mobile payment transaction to be conducted at a contactless point of sale (POS) terminal using the mobile device; and activating one or more sensors co-located with the POS terminal at the time of proximity mobile payment transaction for capturing observational data during the proximity mobile payment transaction.

In some example embodiments, the method further comprises transmitting, from the mobile device, the observational data captured during the proximity mobile payment transaction concerning the proximity mobile payment transaction to a backend server for analysis.

In some example embodiments, the method further comprising, analysing, as the mobile device, a portion of the observational data to issue an instruction guiding a user of the mobile device concerning a proper use of the mobile device to conduct the proximity mobile payment transaction.

In some example embodiments, the instruction comprises information concerning a proper positioning of the mobile device in relation to the POS terminal and/or timing of the positioning of the mobile device next to the POS terminal.

In this manner, the backend server is enabled to monitor the proximity mobile payment transactions conducted by the mobile device remotely and detect common patterns and abnormalities for this and other mobile devices and/or POS terminals. Further, by sharing the observational data with the backend server, the mobile device enables the backend server to provide the mobile device with relevant updates used by the mobile device in guiding its user concerning the proper use of the mobile device as a payment device.

In some example embodiments, the method further comprises capturing, at the one or more sensors, a first portion of the observational data.

In some example embodiments, the method further comprises analysing, at the mobile device, the first portion of the observational data to issue an instruction guiding a user of the mobile device concerning a proper use of the mobile device to conduct the proximity mobile payment transaction.

In some example embodiments, the method further comprises capturing, at the one or more sensors, a second portion of the observational data; and analysing the second portion of the observational data to issue a new instruction guiding the user concerning the proper use of the mobile device to conduct the proximity mobile payment transaction.

In some example embodiments, the analysing comprises: determining, based on the first portion of the observational data, a current state of the mobile device in relation to the POS terminal; and comparing the current state of the mobile device with a desired state of the mobile device to issue the instruction, wherein the instruction is issued if the current state does fall within the desired state, wherein the desired state defines the proper use of the mobile device at a point of the proximity mobile payment transaction when capturing of the first portion of the observational data was completed, and wherein the instruction directs the user to move the mobile device from the current state toward the desired state.

In some example embodiments, the desired state is determined based on one or more of: a device profile associated with the POS terminal and/or a mobile device profile associated with the mobile device.

In some example embodiments, the analysing further comprises: determining an identity of the POS terminal based on the first portion of data; and accessing the device profile based on the determined identity.

In some example embodiments, the identity of the POS terminal is determined based on a GPS location of the mobile device.

In some example embodiments, the one or more sensors are located within the mobile device.

In some example embodiments, at least one of the one or more sensors is separate from the mobile device.

In some example embodiments, the one or more sensors comprise one or more of a camera, a proximity sensor, an accelerometer, a gyroscopic sensor, an audio sensor, or a GPS locator.

In some example embodiments, if a distance between the mobile device and the POS terminal in the current state is greater than a distance between the mobile device and the POS terminal defined by the desired state, the instruction comprises an indication to bring the mobile device closer to the POS terminal.

In some example embodiments, if the mobile device is displaced in relation to a reader field of the POS terminal in the current state in comparison to the desired state, the instruction comprises an indication of a direction in which the mobile device is to be moved to align the mobile device with the reader field of the POS terminal.

In some example embodiments, if a stationary time period of the mobile device in a proximity to the reader field in the current state during a reading process by the POS terminal is shorter than a stationary time period defined by the desired state, the instruction comprises an indication to hold the mobile device stationary.

In some example embodiments, the method further comprises transmitting, from the mobile device, the observational data captured during the proximity mobile payment transaction concerning the proximity mobile payment transaction to a backend server for analysis.

In some example embodiments, the instruction comprises one or more of: a computer-generated voice command, an image displayed on a screen of the mobile device, a text displayed on the screen of the mobile device, and/or an image superimposed on image data being captured by a camera of the mobile device and depicted on the screen of the mobile device.

In some example embodiments, the method further comprises activating, on the mobile device, a user interface for submitting an indication to a payment transaction provider that the POS terminal is not working properly, if the proximity mobile payment transaction is unsuccessful.

In some example embodiments, the received observational data comprises, at least one of: one or more video frames depicting execution of the proximity mobile payment transaction, one or more still shots depicting execution of the proximity mobile payment transaction, audio data captured during the proximity mobile payment transaction, proximity data concerning proximity of the mobile device to the POS terminal, orientation data concerning an orientation of the mobile device, velocity data concerning a velocity of the mobile device during the proximity mobile payment transaction, speed data concerning a speed of the mobile device during the proximity mobile payment transaction, or GPS data.

According to a third aspect, a computer readable medium is provided. The medium stores instructions thereon which, when executed by at least one processor of a computer system or an electronic device cause the computer system or electronic device respectively to carry out any of the methods described above in respect of the first and second aspects.

According to a fourth aspect, a mobile device is provided. The mobile device comprises one or more sensors configured to capture observational data concerning proximity mobile payment transactions conducted using the mobile device; at least one processor; and memory storing instructions, which when executed by the at least one processor cause the mobile device to perform any of the methods described above in respect of the second aspect.

In some example embodiments, the one or more sensors comprise one or more of a camera, a proximity sensor, an accelerometer, a gyroscopic sensor, an audio sensor, and/or a GPS sensor.

According to a fifth aspect, a backend server is provided. The backend server comprises at least one processor; and a memory storing instructions, which when executed by the at least one processor cause the backend server to perform any of the methods described above in respect of the first aspect.

### Brief Description of the Drawings

Embodiments of the present disclosure will be described, by way of example only, with reference to the accompanying drawings, in which:
FIGURE 1 shows a diagram of a system for monitoring and guiding proximity mobile payment transactions, according to some embodiments of the present disclosure;
FIGURE 2 shows a diagram of an NFC-enabled mobile device that may serve as a payment device in a proximity mobile payment transaction, according to some embodiments of the present disclosure;
FIGURE 3 depicts an exemplary arrangement for storing data concerning POS terminals and their features according to some embodiments of the present disclosure;
FIGURE 4 depicts an exemplary arrangement for storing data concerning mobile devices, according to some embodiments of the present disclosure;
FIGURE 5 illustrates a flow diagram of a method, executed at the backend, for monitoring and guiding proximity mobile payment transactions, according to some embodiments of the present disclosure;
FIGURE 6 illustrates a flow diagram of a method, executed at the front end, for monitoring and guiding proximity mobile payment transactions, according to some embodiments of the present disclosure; and
FIGURES 7A, 7B, 7C, and 7D depict exemplary user interfaces deployed at mobile devices for guiding their users concerning the proper use of the mobile devices during proximity mobile payment transactions, according to some embodiments of the present disclosure.

### Detailed Description

Embodiments of the present disclosure provide methods and systems for monitoring proximity mobile payment transactions automatically and remotely. By collecting and analysing observational data captured by sensor(s) (sensor devices) collocated with the POS terminals, at the time that the payment transactions are conducted at such POS terminals, such as sensors of mobile devices used to conduct the payment transaction and/or merchants' sensor(s) (sensor devices) separate from the mobile devices, features/characteristics of the POS terminals are detected and their faults are discovered, automatically, accurately, and promptly. In this manner, the payment service providers (and/or other involved entities supporting the POS terminals) are able to monitor the POS terminals that they support, including POS terminals' quality, their compliance with the standards issued by the payment service providers, and their workability, and to request/dispatch service to fix/replace faulty or inadequate POS terminals promptly. In this manner, improved and more reliable merchant and user experiences are provided. Embodiments of the present disclosure further provide for an automated and tailored assistance to consumers carrying out proximity mobile payment transactions at contactless POS terminals by guiding the consumers at their mobile devices concerning the proper use of the mobile devices during the payment transactions. Results derived from the analysis of the observational data collected concerning payment transactions previously conducted at the same POS terminals and/or POS terminals of the same type/model are used to tailor the guiding service in relation to the particular POS terminal and/or mobile phone, thereby providing an improved user experience.

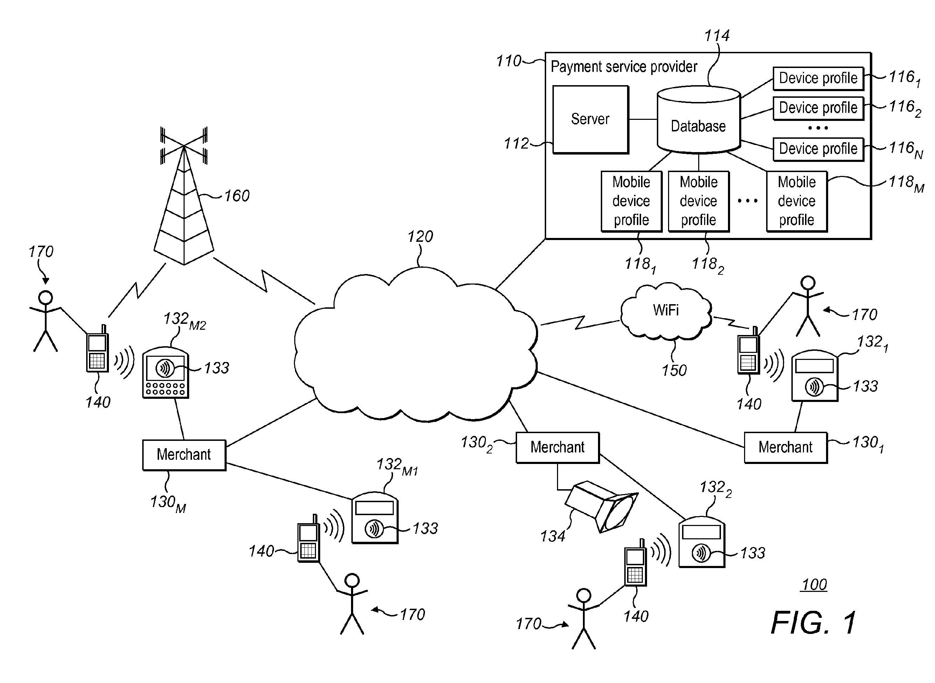

FIGURE 1 depicts a system 100 for monitoring proximity mobile payment transactions and guiding consumers (users) 170 concerning the proper use of their mobile devices 140 to conduct the mobile proximity payment transactions. In particular, the system 100 includes a payment service provider 110 and a plurality of merchants 130 in communication with the payment service provider 110 via a communication network 120. The merchants 130 have one or more contactless payment-capable POS terminals (readers) 132 that enable consumers to pay for merchant's goods and/or services using their contactless payment devices, such as the mobile devices 140. Each mobile device 140 is an NFC enabled mobile device and includes a payment application installed therein for conducting proximity mobile payment transactions, guiding its user concerning the proper use of the mobile device during the proximity mobile payment transactions, and/or monitoring the proximity mobile payment transactions.

The payment service provider 110 is an entity in some manner involved in or related to processing of the proximity mobile payment transactions, including but not limited to a merchant's bank, a payment-processing network (such as the MasterCard™ payment system), a consumer's bank. In some embodiments, the payment service provider 110 facilitates processing and settlement of the payment transactions between the merchants 130 and the consumers 170, including between the merchants' bank and the consumers' bank. The payment service provider 110 may also issue specification standards/guidelines concerning the payment transactions processing, including the standards for devices used to conduct proximity mobile payment transactions, such as the mobile devices 140 and the contactless POS terminals 132.

The merchant 130 initiates a particular mobile proximity payment transaction by, for example, keying in a transaction amount into the POS terminal 132. Alternatively, or in addition, the consumer 170 may initiate the payment transaction by activating the payment application installed on the mobile device, by activating the payment transaction within the payment application, if the application has been previously activated/initialised and is running in the background on the mobile device, or by simply tapping of waiving the mobile device 140 against the POS terminal 132.

In a typical proximity mobile payment transaction, the consumer 170 places the mobile device against a reader field of the POS terminal 132 (usually no further than 10 centimetres from reader field) and holds it there stationary for a certain period of time (e.g., a few seconds) to enable the POS terminal 132 to read from the mobile device 140 the data necessary to execute the payment transaction. The reader field is typically indicated on the POS terminals 132 by the contactless payment sign 133, which is typically located at the centre of a reader antenna. The contactless sign 133 may be permanently displayed on the POS terminal or only after a contactless payment transaction has been initiated (e.g., the sign 133 is displayed on a screen of the POS terminal 132. Upon completion of the reading process, the POS terminal 132 may provide an indication that the process has been completed and that the mobile device 140 may be removed, e.g., by emitting a sound or light and/or by providing a message, and the like. The POS terminal 132 will also provide an indication, at least to the merchant 130, concerning whether the payment transaction was successful. The payment and settlement processes for the proximity mobile payment transactions are generally the same as for contactless credit and debit card payment transactions.

To monitor the proximity mobile payment transactions (the monitoring service), in accordance with some embodiments, in response to the initiation of the payment transaction, sensors of the mobile device (such as a camera, a GPS locator, an audio sensor, a proximity sensor, an accelerometer, a gyroscopic sensor and/or the like) are activated/initialised/instructed to start capturing data concerning the payment transaction whilst the transaction is being conducted. In some embodiments, merchant's observational device(s) 134, such as a video camera with a field of view encompassing the POS terminal 132, an audio sensor positioned in the proximity of the POS terminal so as to capture sounds associated with transactions conducted at the POS terminal, and the like, are also activated/initialised/instructed in response to the initiation of the payment transaction to start capturing data concerning the payment. In some embodiments, only the merchant's observational device(s) 134 are activated/initialised/instructed, and not the mobile device sensors. The skilled person would appreciate that whether and which of the mobile device sensors and merchant's observational device(s) 134 are activated/initialised/instructed to capture the data vary between different implementations and depends on technical capabilities and resources of the merchant 130, the payment service provider 110, and/or mobile device 140, preferences of the merchant 130, the payment service provider 110, and/or the user 170, particularities of the POS terminal placement, and other circumstances and conditions. The data capture by the sensors is terminated upon completion of the payment transaction, successfully or unsuccessfully.

The sensor(s) of the mobile device 140 and/or merchant's observational device(s) 134 are operable to capture diverse information (observational data) concerning the proximity mobile payment transactions, such as still/video image data, audio data, position, orientation, and/or proximity of the mobile device in relation to the POS terminal and its reader field, velocity and/or speed of the mobile device during the transaction, GPS location, and the like. Analysis of such data allow to determine specific points of the transaction (e.g., POS terminal reading data from the mobile device, the reading process completed, the reading process has not completed, but failed, etc.) and various features/characteristics associated with that POS terminal (a model and/or type of the POS terminal), the mobile device (a model and/or a type of the mobile device), and user's presentation of the mobile device during the transaction in relation to the specific points of the transaction. These features/characteristics include, but are not limited to, an identity of the POS terminal (e.g., ID, GPS location, merchant, model, type, distinguishing features, brand, and the like), an identity of the mobile device (ID, model, type, brand, and the like), and presentation features, such as positioning of the mobile device in relation to the reader field of the POS terminal at various points of the payment transaction (e.g., a distance between the mobile device and the reader field of the POS terminal, a shift of the mobile device in relation to the reader field, speed/velocity of the mobile device, stationary time - for how long the mobile device was held in the same position in relation to the reader field - and the like). By analysing a statistically significant amount of data, determinations can be made with respect to a particular POS terminal concerning a distance between mobile devices and the reader field of the POS terminal allowing reading of data from the mobile devices, an acceptable shift of the mobile device in relation to the reader field, a minimum stationary time, and the like. Collection of the observational data and its analysis enable monitoring of the proximity mobile payment transactions, determination of faulty POS terminals or POS terminals that do not comply with the current standards, and/or guiding the consumers during the proximity mobile payment transactions concerning the proper use of their mobile devices.

For example, a camera located in the mobile device 140 or otherwise co-located with the POS terminal 132 at the time of the payment transaction is operable as a sensor to capture video and/or still images of the payment transactions. More specifically, the mobile device camera located on the side of the mobile device that is usually placed against the reader field of the POS terminal 132 has the POS terminal 132 in its field of view at least at some points during the payment transaction. The merchant's camera 134 is placed such as to encompass in its field of view the POS terminal 132. In this manner, these camera(s) are operable to capture video/still images that can be analysed using, for example, the machine vision technology and methods such as pattern recognition analysis, to detect features/characteristics of the POS terminal, the mobile device, and user's presentation style. Other types of sensors, such as a GPS locator, an audio sensor, a proximity sensor, an accelerometer, a gyroscopic sensor, are operable to capture data that further enhances the analysis of the video/still image data by providing additional layers of data concerning the payment transactions and different points of reference in relation to the payment transactions (although this data is used independently in some embodiments). Such additional data includes a GPS location of the mobile device, a position and/or orientation of the mobile device in relation to the mobile device 140, a velocity/speed of the mobile device, audio data (e.g., sound indicators emitted by the POS terminal) and/or other information. All information captured in connection with the payment transaction, including video/still image data, is referred herein as observational data.

As discussed, the observational data is generally analysed to detect various characteristic/features of the POS terminal 132, mobile device 140, and/or the consumer's use of the mobile device 140 during the transaction (including patterns concerning the use of mobile devices among different consumers and and/or different mobile devices at a single POS terminal, a single model of POS terminal or type of POS terminal). In some embodiments, the analyses are performed so as to enable the mobile device 140 to guide its user 170 concerning the proper use of the mobile device 140 during the payment transactions at various POS terminals. In certain embodiments, before guiding the user 170, a determination that the user 170 uses the mobile device 140 improperly is made. In certain other embodiments, the user is guided through the transaction regardless of whether he/she uses the mobile device properly or not.

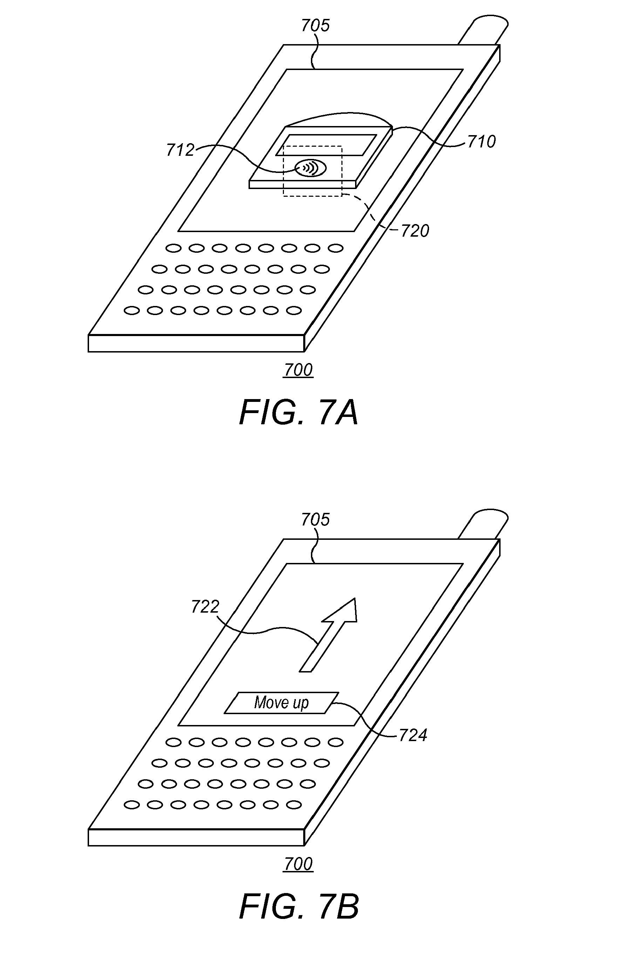

The user can be guided by the means of voice commands (e.g., voice commands advising the user 170 to move the mobile device 140 closer to the POS terminal or to hold the mobile device steady), text messages of similar content, video/screen shots showing to the consumer 170 what to do at each step of the transaction, images superimposed onto a video/still images currently being captured by the mobile device and displayed on the mobile device screen (e.g., a frame superimposed onto the image of the POS terminal to indicate the proper placement of the mobile device), and/or the like. FIGURES 7A-7D provide some examples of the user interface for guiding the user concerning the proper use of the mobile device, which are discussed below.

In some embodiments, the observational data is analysed to determine whether the POS terminal is working properly. By comparing the results of analysis of the currently captured data with the results of analysis of data collected during prior payment transactions and/or with features (settings, thresholds, and the like) established for the POS terminal, its model, and/or its type, such as standards and/or specifications associated with the model or type of the POS terminal, a determination can be made as to whether the POS terminal is not working, working improperly, and/or does not satisfy certain standards. When a fault and/or non-compliance are detected, a service request for the POS terminal is generated and issued.

In certain embodiments, the observational data is analysed in conjunction with respective payment transaction data, such as whether the payment transaction was successful, the total amount of the transaction, and the like. This information provides an additional layer of information, enabling more precise analysis of certain transactions, for example, when it is not possible to determine based on the observational data alone whether the payment transaction was successful. The payment service provider may already be in possession of the necessary payment transaction data or may receive such data from another entity separately, for example, from the merchant where the transaction took place, from the mobile device that was used during the transaction, and the like. In the latter scenario, the payment transaction data simply accompanies the corresponding observational data.

The analysis of the observational data may be performed at the backend, such as a remote (or backend) server 112 of the payment service provider 110 (e.g., to enable the monitoring service) and/or at the front end, such as mobile devices 140 (e.g., to enable the guiding service). The monitoring service requires for the captured observational data to be transmitted from the mobile device 140 and/or the merchant's observational device 134 to the remote (backend) server 112.

The observational data may be transmitted using a WI-FI network 150, a cellular network 160, a wired network (e.g., when the merchant's observational device is connected to such a network), or the like. In some embodiments, the observational data is transmitted contemporaneously with being captured during the payment transaction. In some other embodiments, the observational data is transmitted following the completion of the payment transaction. In yet some other embodiments, the observational data are transmitted at some other time. For example, the observational data may be captured and collected during the day and transmitted at night. Further, in some embodiments, the time of transmission of the observational data from the mobile device 140 depends on the settings of the payment application installed on the mobile device 140 or the settings of the mobile device 140 itself. For example, the user of the mobile device 140 may prefer to allow transmission of the observational data only when the mobile device 140 has a Wi-Fi connection, to avoid charges of a cellular service provider for transmission of the data.

To facilitate analysis of the observational data, in some embodiments, the payment service provider hosts a database 114 that includes device profiles 116 for various POS terminals. The device profiles 116 include profiles for POS terminals known to the payment service provider, profiles for models of POS terminals known to the payment service provider, and/or profiles for types of POS terminals known to the payment service provider. In some embodiments, the database 114 also includes similar types of profiles for mobile devices (individual, model, and/or type) - mobile device profiles 118. The device profiles 116 and mobile device profiles 118 store data concerning the POS terminals and mobile devices respectively that resulted from the analyses of the previously collected observational data and/or were pre-determined (such as specifications provided by the device manufacturers and/or standards/specification set by the payment service provider). The specification and standards may be stored as separate device profiles or be incorporated into individual device profiles 116. The device (mobile) profiles are updated, such as upon the completion of analysis of new observational data and/or when new device specifications/standards are provided by manufactures or set by the payment service provider.

In some embodiments, mobile devices 140 store similar information concerning the POS terminals and the mobile device itself. Such information is updated using updates provided by the payment service provider and/or as the mobile device 140 captures and analyses new observational data.

The consumer 170 would typically, though not necessarily, agree to allow capturing of the observational data during the payment transactions before the monitoring and/or guiding services are activated, such as in the context of the terms and conditions agreement signed by the user 170 with his or her bank and/or the payment service provider, and/or upon installation of the payment application on the mobile device 140. In some embodiments, a user's consent to capture and record the observational data is requested at the time the payment transaction is initialised. Further, in some embodiments, the user must expressly indicate that he or she is about to conduct a payment transaction using the mobile phone 140 to allow the monitoring and/or guiding services during that payment transaction, even if the user has already agreed to allow capturing of the observational data. Thus, in such embodiments, when the payment application enables the user 170 to conduct proximity mobile payment transactions, without expressly indicating at the mobile device that the transaction is about to be conducted (for example, by simply placing the mobile device against the reader field of the POS terminal), and the user does not expressly indicate the initialisation of the payment transaction, the monitoring/guiding feature is not employed/executed for such a payment transaction.

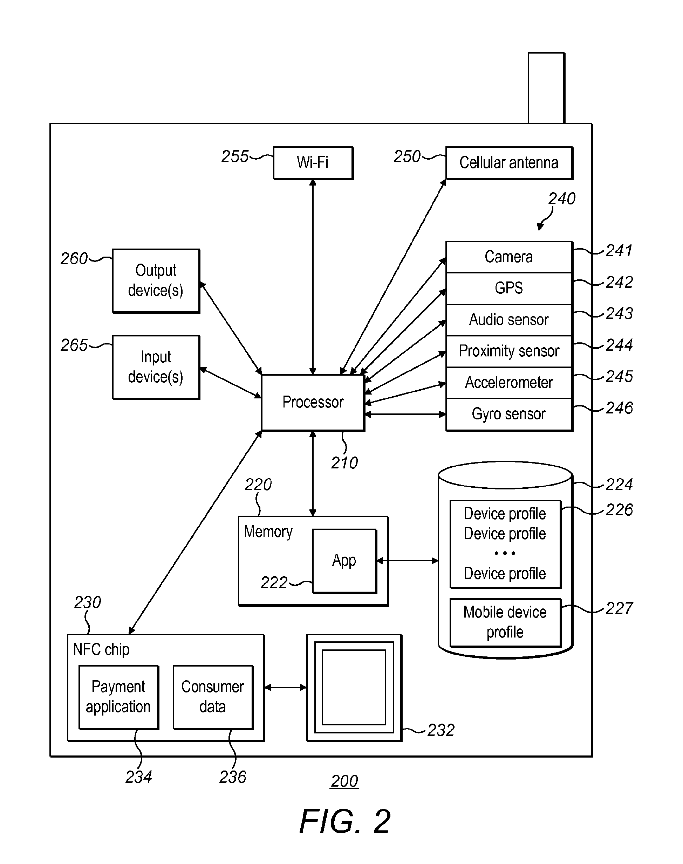

FIGURE 2 shows a diagram of an NFC-enabled mobile communication device 200 that can be used to conduct proximity mobile payment transactions at contactless POS terminal(s)/reader(s), according to some embodiments of the present disclosure. More specifically, FIGURE 2 depicts the components of the mobile device that are used to implement the systems and methods disclosed herein. For simplicity of explanation, other components of the mobile device 200 are omitted from the diagram.

The mobile device 200 includes a processor 210 and a memory 220. The memory 220 may be fixed, such as being a part of a circuit board (not shown) of the mobile device 200, or removable from the mobile device 200, such as a removable memory card. The memory 220 stores various data and may be in any suitable form, including a magnetic stripe, a memory chip, a memory card, and the like. In particular, the memory 220 stores application(s) 222 that include suitable code(s) for performing any or all of the steps of the methods described herein and related functions of the mobile device when executed by the processor 210. In some embodiments, the applications 222 include one or more of: a) code for collecting observational data during proximity mobile payment transactions; b) code for transmitting the collected data towards a payment service provider; c) code for guiding a user concerning the proper use of the mobile device whilst conducting a contactless payment transaction; d) code for updating data used for guiding the user, such as data concerning POS terminals and their characteristics; e) code for enabling the user to report a problem with a particular POS terminal; and/or others. The memory 220 may further store any suitable code for execute any or all of the functions of the mobile device 200.

As shown, the mobile device 200 further includes a database (or tables) 224 in a separate memory. Alternatively, the database 224, or its content, may be stored within the memory 220. The database 224 contains device profiles 226 associated with various POS terminals and/or a profile 227 of the mobile device. The device profiles 226 generally include features/characteristics associated with particular POS terminal(s), particular model(s) of POS terminals, and/or particular type(s) of POS terminals. The mobile device profile 227 includes characteristics specific to the mobile device that influence how the mobile device should be used during a proximity mobile payment transaction, such as a location of an NFC element within the mobile device 200. These characteristics are used to generate and provide guidance to the user concerning the proper use of the mobile device when conducting proximity mobile payment transactions at contactless POS terminals. The observational data captured by the mobile device during contactless payment transactions may also be stored in the database 224, temporarily, until the analyses are complete, or on a more permanent basis.

The mobile device 200 also includes sensor(s) (sensor device(s)) 240, including camera(s) 241, GPS locator(s) 242, audio sensor(s) 243, proximity sensor(s) 244, accelerometer(s) 245, and/or gyro sensor(s) 246. Each camera 241 is an image-acquiring device operable to obtain still and/or video images. Some mobile devices include more than one camera 241. For example, a mobile device may have two cameras embedded on the opposite sides of the device (face and back). The camera 241 is activated to capture images in its field of view in response to the initiation of a proximity mobile payment transaction at a contactless POS terminal. Typically, presuming the use of the mobile device 200 in a manner similar to the intended (proper) use, the camera field of the view includes the POS terminal at least at some points of the transaction.

If the mobile device 200 includes more than one camera, in some embodiments, the camera that is more likely to face the POS terminal during the payment transaction is activated first (e.g., camera at the back of the mobile device). If no POS terminal is detected in the camera's field of view, then another camera of the mobile device is activated. Alternatively, all cameras of the mobile device may be activated in response to the initiation of the payment transaction and only images including the POS terminal or that should have included the POS terminal, if the mobile device was used properly, are included into the observational data concerning the payment transaction. Images not including the POS terminal are ignored and not stored in some embodiments.

The GPS locator 242 includes an antenna that receives transmissions from GPS satellites and uses triangulation to calculate the location of the mobile device 200. The audio sensor 243 is operable to capture sounds during the payment transaction, such as an audio indicator (e.g., a beep) issued by the POS terminal to indicate that all data necessary for the payment transaction has been read from the payment device. The proximity sensor 244 is operable to detect presence of other objects near the mobile device 200, and in particular of a contactless POS terminal, without any physical contact with the objects. It senses how close the mobile device 200 is to the contactless POS terminal.

The accelerometer 245 enables the mobile device 200 to detect the orientation of the mobile device 200. It measures the acceleration of the device relative to free fall in three different axes: X, Y, and Z. The gyroscope sensor 246 enables the mobile device to detect the orientation and position of the mobile device, based on the principles of angular momentum. By combining the measurements obtained by the accelerometer 245 and the gyroscope sensor 246, the mobile device 200 is able to sense its motion on six axes: left, right, up, down, forward and backward, as well as roll, pitch, and yaw rotations, thereby providing for more accurate motion sensing abilities than the accelerometer or gyroscope sensor alone. The data captured by some or all of the sensors 241, 242, 243, 244, 245, and 246 during a contactless payment transaction forms the observational data concerning that transaction and is analysed to provide guidance to the user of the mobile communication device 200 and/or to enable the payment service provider to gather data concerning the contactless POS terminal involved in the transaction, such as features/characteristics associated with the POS terminal, and whether the POS terminal is working properly.

The mobile communication device 200 further includes output device(s) 260 (such as an electronic display and a speaker) to allow a consumer to see and/or hear various information, messages, videos, and others. In particular, in some embodiments, the output device(s) 260 are used to guide the user during the contactless payment transactions concerning the proper use of the mobile device 200. The mobile communication device 200 also includes input device(s) 265 (such as a keyboard and/or touch screen) to allow the user to input information into the device.

A cellular antenna 250 and a Wi-Fi antenna 255 are operable for establishing cellular and Wi-Fi communications respectively. These communications facilitate wireless voice and data transfer, including transfer of the captured observational data to the payment service provider.

The mobile device 200 further includes a contactless element 230 (such as an NFC semiconductor chip or other secure storage element) and an NFC antenna 232 (such as a loop of wire) for respectively storing data securely and establishing a close-range communication with another NFC-enabled device to transfer data wirelessly from and to the mobile device 200. In particular, the contactless element 230 and the NFC antenna 232 enable a close-range communication and exchange of data and/or control instructions between the mobile device 200 and a contactless element of a merchant's contactless POS terminal.

To enable the mobile device 200 to participate in the proximity mobile payments, the contactless element 230 hosts a payment application 234 and stores securely consumer account data, such as financial information, required to conduct a successful payment transaction. The financial information may include information such as bank account information, a bank identification number, credit and/or debit card number information, account balance information, an expiration date, and the like. The financial information may further include consumer information, such as a name, an address, a date of birth, and the like. Any and all of this information may be transmitted by the mobile device 200 to the contactless POS terminal during a proximity mobile payment transaction. If the NFC chip 230 stores financial information for different financial institutions, at the time of the payment transaction initiation, the payment application 234 typically allows the user of the mobile device 200 to select a particular account that the user desires to use for a particular payment transaction.

Although only certain components are shown in FIGURE 2, the skilled person would recognise that the mobile communication device 200 may include additional suitable components to enable functionality of the mobile device as a payment device and/or of gathering observational data during the proximity mobile payment transaction, a subset of the shown components, or a combination of such components. Further, the guiding and monitoring services, discussed herein may be implemented as a part of the payment applications or as separate applications, stored at the NFC chip 230, the memory 220, or other suitable component of the mobile device 200.

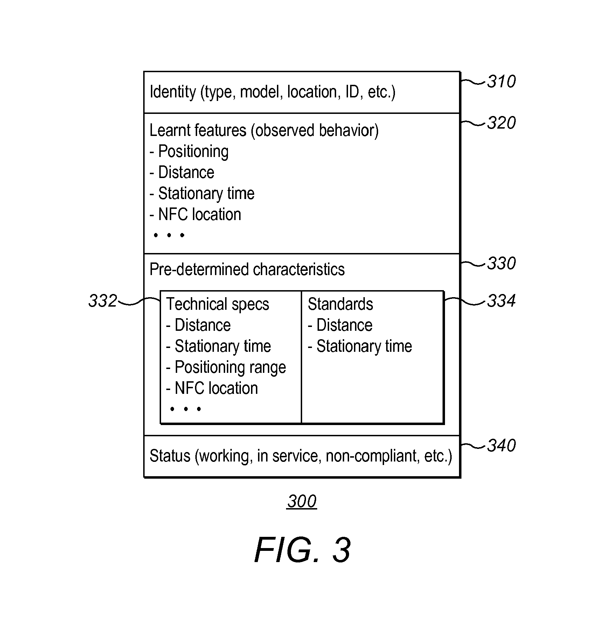

FIGURE 3 depicts an exemplary device profile 300 for storing data concerning POS terminals and/or mobile devices such as observed and/or pre-determined features/characteristics of the associated device(s), according to some embodiments of the present disclosure. Although features/characteristics may differ for POS terminals and mobile devices, in some embodiments, the same structure is employed for storing such features/characteristics for both POS terminals and mobile devices. The mobile device profile 300 may be device specific, model specific, or type specific.

Generally speaking, the device profile 300 includes three different types of data: (1) identity data 310, which may be learnt, pre-determined, and/or set, (2) learnt features/characteristics 320, and (3) pre-determined or pre-set characteristics 330. The device profile 300 may also include a status of the device, such as whether the device is working, is being serviced, satisfies standards/ specifications pre-set for that device, and/or the like.

The identity data 310 identifies the associated device(s) in some manner. If the device profile 300 corresponds to an individual POS terminal, such data may include, but is not limited to, a POS Terminal ID, a POS terminal model and/or type, a location of the POS terminal (such as a GPS location and/or merchant), and/or the like. In some embodiments, the payment service provider assigns a POS Terminal ID at the time the POS terminal has been discovered. The ID may be based on the location of the POS terminal, a merchant associated with the POS terminal, assigned randomly, or the like. If the device profile 300 corresponds to a POS terminal model/type, the identity data 310 may include, but is not limited to, an ID, a model/type of the POS terminals, references to individual POS terminals of that model/type, manufacturer, and/or the like.

If the device profile 300 corresponds to an individual mobile device, the identity data may include, but is not limited to, a phone number associated with the mobile device, an ID associated with the owner of the mobile device (e.g., a name, an account number), a SIM card number, a mobile device model/type, a manufacturer, and/or the like. If the device profile 300 corresponds to a particular mobile device model/type, the identity data may include, but is not limited to, an ID, a mobile device model/type, a manufacturer, and/or the like.

The learnt features/characteristics 320 generally represent features/ characteristics of the associated device(s) (POS terminal(s)/mobile device(s)) that are deduced based on a plurality of proximity mobile payment transactions in which the device(s) have participated. Some learnt features/characteristics 320 would be common to all or some known devices; other learnt features/characteristics would differ between different device models/types. If a particular device profile 300 corresponds to a device model/type, the learnt features/characteristics 320 generally include features/characteristics common to devices of that model/type and are based on analyses of observational data of multiple transactions at different POS terminals of that model/type. Each characteristic is not necessarily present in each device profile 300, and learnt characteristics are generally added to/updated in the device profiles 300 as the new observational data is received and analysed.

Examples of the learnt features/characteristics 320 include, but are not limited to, a stationary time of the mobile device during the payment transaction (such as an amount of time the POS terminal takes to read data from the mobile payment device, an average time that a consumer allows for the POS terminal to read the data, etc.), movements of the mobile device during the payment transaction (such as movements/motions of the mobile device before/during/after the POS terminal reading process), a distance (such as how far/close from/to the POS terminal the mobile device can be held to allow the POS terminal to read data from the mobile payment device, an average learnt distance between the mobile device and the POS terminal during payment transactions, etc.), a location of the reader field at the POS terminal, a location of the NFC antenna at the mobile device, a positioning of the mobile device in relation to the POS terminals (such an acceptable displacement/shift between the mobile payment device and the reader field of the POS terminal), whether the POS terminal provides any and what indications concerning the progress of the payment transaction, and/or the like. In other words, the learnt features/characteristics 320 represent/describe the device (POS terminal/mobile device) behaviour observed and learnt over the plurality of transactions in relation to the other device (mobile device/POS terminal) involved in the payment transaction. The learnt features/characteristics 320 are updated as new observational data is received and analysed.

The pre-determined features/characteristics 330 include technical specifications 332, such as specifications set/provided by the manufacturer of the corresponding POS terminal(s)/mobile device(s), and/or standards 334 that the devices involved in proximity mobile payment transactions are involved must satisfy as set, for example, by the payment service provider. These features/characteristics are usually not updated based on the observational data analysis, but may be updated if, for example, a manufacturer adjusts the device specifications and/or new standards are issued.

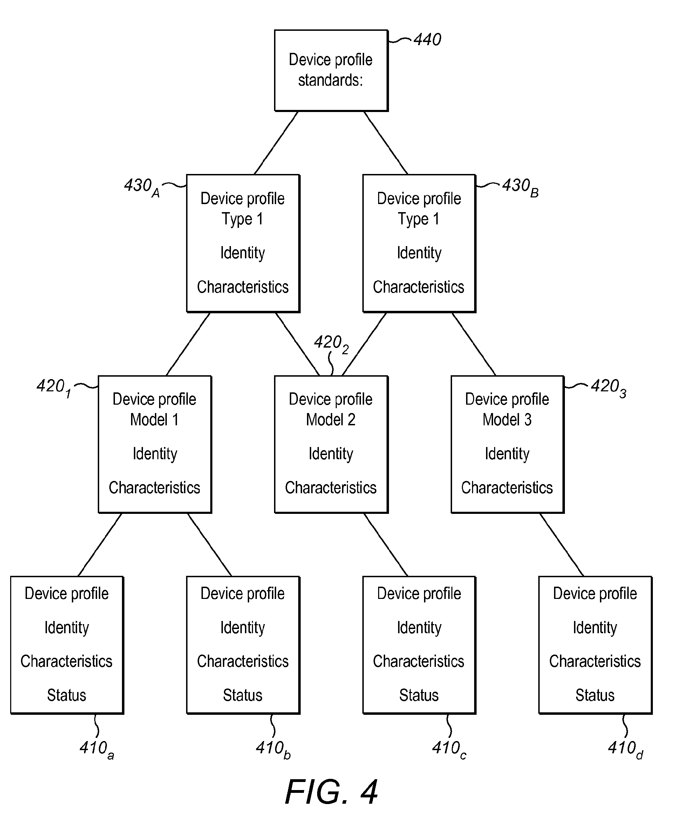

FIGURE 4 shows an exemplary arrangement/system 400 including individual device profiles, model device profiles, and type device profiles. Such an arrangement is employed at the backend, such as a database 114 (shown in FIGURE 1) of the payment service provider, according to some embodiments of the present disclosure. Although described below with references to POS terminal profiles, a similar arrangement may be used to store data concerning mobile devices, such as mobile devices 140 (shown in FIGURE 1).

The exemplary system 400 sets a hierarchical relation between different kinds of the device profiles. The lowest level of the system 400 includes individual device profiles for the POS terminals (readers) known to the payment service provider, such as device profiles 410a, 410b, 410c, and 410d. New individual profiles 410 are created within the system 400 when the payment service transaction provider receives, or obtains through analysis of the observational data, information concerning a POS terminal not previously included into the arrangement 400. The individual device profiles include identity data, learnt features/characteristics of the POS terminal, and/or a status of the device. The individual device profiles may further include pre-determined or pre-set characteristics of the device.

The next level of the system 400 includes device profiles storing data associated with different POS terminal models (e.g., manufacturer's models), such as model device profiles 420₁, 420₂, and 430₃. Each model device profile 420 represents a specific POS terminal model and is connected to the individual device profile(s) of POS terminal(s) of that model. For example, in FIGURE 4, the individual device profiles 410ₐ and 410_{b} are connected to the model device profile 420₁, individual device profile 410_{c} is connected to the model device profile 420₂, and individual device profile 410_{d} is connected to the model device profile 420₃. The model device profiles 410 contain characteristics common to the individual POS terminals of that model. Such characteristics include characteristics that have been discovered by the payment service provider based on the analysis of the observational data and/or specifications provided/set by the manufacturer for that particular POS terminal model.

The next level of the system 400 is device profiles associated with different POS terminal types, such as type device profiles 430_{A} and 430_{B}. Each type device profile represents a particular POS terminal type (e.g., portable vs. stationary, a manufacturer, selected technical specifications, etc.) and is connected to the model device profile(s) of POS terminal models of that type. For example, in FIGURE 4, the model device profiles 420₁ and 420₂ are connected to the type profile 430_{A} whilst the model device profile 420₃ is connected to the type device profile 430₂. The type device profiles 430 include characteristics common to the POS terminals models of that type. Such characteristics include characteristics that have been discovered by the payment transaction provider based on the analysis of the observational data and/or specifications provided/set by the manufacturer(s) of that particular type of the POS terminals.

In some embodiments, each model device profile is not just encompassed by a single type device profile. In other words, since a type of the device is defined by certain feature(s) of POS terminals (e.g., the amount of time required by a POS terminal to read data from a mobile device, the placement of a mobile device in relation to the POS terminal, and the like), a single model may be associated with more than one type of POS terminal. For example, FIGURE 4 shows the model device profile 420₂ being connected to two type device profiles 430_{A} and 430_{B}.

The top level of the system 400 is a device profile 440 including industry standards/guidelines for the POS terminals. The standards are the minimum requirements that each POS terminal must satisfy. More than one standard device profile may be included in the system 400. For example, different models/types of POS terminals may need to satisfy different standards. If the standards change, the standard device profiles are updated accordingly. Further, in some embodiments, no separate device profile 440 is employed for storing the standards, and rather, the content of the device profile 440 is incorporated within all or some of other device profiles 410, 420, and/or 430.

The system 400 depicted in FIGURE 4 defines a hierarchical relation between device profiles of different kinds. However, other relations and/or arrangements may be employed for storing and updating data concerning the POS terminals. For example, in some embodiments, only individual device profiles are used, where the individual device profiles include a model and/or a type of the device and store, in addition to or instead of individual characteristics, characteristics common to that model/type, as they are learnt by the payment service provider. In some embodiments, each device profile is linked to the existing standards directly. Yet in some embodiments the device profiles are not in a hierarchical relation and each device profile defines features/characteristics that are critical to payment transactions conducted at POS terminals associated with that device profile only. The skilled person would appreciate that multiple other arrangements may be employed to store data concerning the POS terminals/mobile devices, whether it is learnt by observing the payment transaction or simply received or obtained from manufactures.

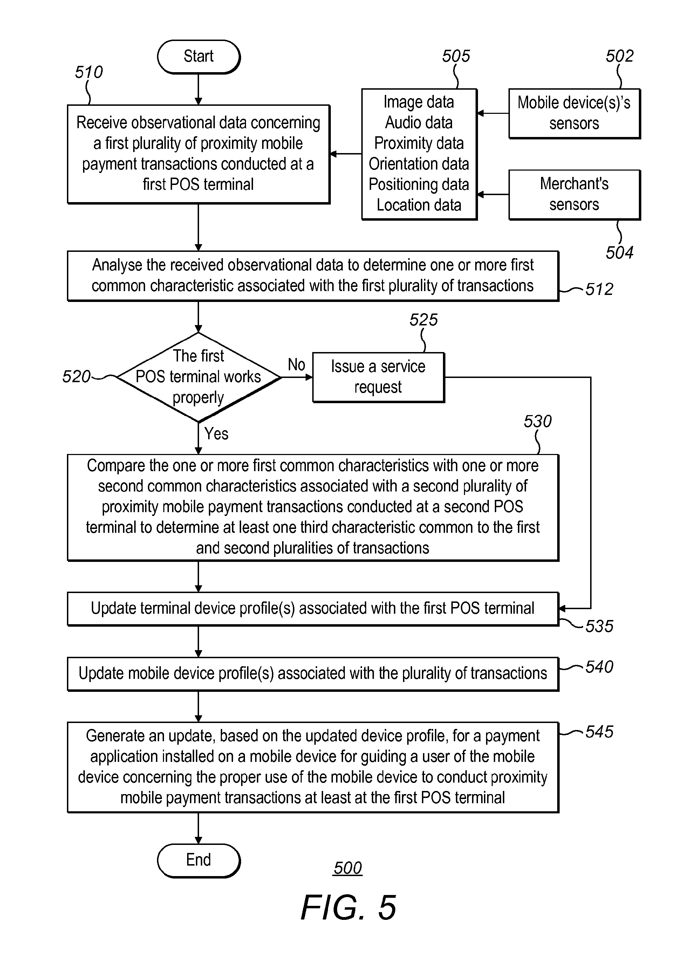

FIGURE 5 illustrates a flow diagram of a method 500 for monitoring and guiding proximity mobile payment transactions executed at the backend such as at a server of a payment service provider, according to some embodiments of the present disclosure. The method 500 starts at step 510 at which observational data 505 concerning a first plurality of proximity mobile payment transactions conducted at a first POS terminal is received. As shown in FIG. 5 and discussed herein, the observational data 505 may include a variety of data that has been acquired during the first plurality of transactions by mobile device(s) used during the transactions and/or by merchant's sensors co-located with the first POS terminal. The observational data 505 may include image data (video and/or still), audio data, proximity data, orientation data, positioning data, location data (e.g., GPS data) and/or other data gathered by the sensor(s) of the mobile device(s) and merchant's sensors.

At step 515, the received observational data is analysed, to determine one or more first common features/characteristics associated with at least some transactions from the first plurality of transactions. In particular, step 515 includes determining an identity of the first POS terminal and/or mobile devices involved in the first plurality of transactions, and/or characteristic(s)/feature(s) associated with the POS terminal and/or the mobile devices describing a presentation style of the mobile devices in relation to the first POS terminal, such as speed and/or velocity with which mobile devices have been placed against the first POS terminal and then removed, for how long the mobile devices have been held stationary whilst the first POS terminal was reading data from the mobile device, how close to the first POS terminal the mobile devices were held, location of the reader field on the first POS terminal (e.g., identified by the contactless payment symbol), and others.

At step 520, a determination is made, based on the determined one or more characteristics, as to whether the first POS terminal is working properly. In some embodiments, this determination is made by comparing the determined characteristics to corresponding characteristics, previously learnt (e.g., characteristics of the first POS terminal in a workable state) and/or pre-determined (e.g., manufacturer's specifications), in the device profile corresponding to the POS terminal. If the determination is negative, at step 525, a service request is issued to replace/fix the first terminal. Further, a device profile associated with the first terminal may be updated at step 535 to change the status of the first terminal to indicate that the terminal is being serviced and is not working. In some embodiments, at step 520, the determined characteristics are also compared to the standards issued by the service payment provider for POS terminals. If the comparison results indicate that the first POS terminal fails to satisfy the standards, its status is updated accordingly. Further, in some embodiments, a service request to replace the first POS terminal with a POS terminal satisfying the standards is issued.

If at step 520 it is determined that the first POS terminal is working properly (and/or satisfies the standards), at step 530, the one or more first common characteristics are compared to one or more second characteristics determined based on a second plurality of transactions at a second POS terminal to determine at least one third characteristic common to the first and second plurality of transactions. Step 530 is typically performed if a determination has been made that the first and second terminals are of the same model or of the same type.

At step 535, one or more device profile(s) associated with the first terminal are updated. If no device profile associated with the first terminal can be located, new device profile(s) may be created. As discussed above with respect to FIGURES 3 and 4, the device profile may be an individual device profile, a model device profile, and/or a type device profile. At step 535, all or some of the device profiles, associated with the first terminal, are updated. The individual device profile is updated based on the one or more first common characteristics determined at step 515. The individual device profile may also be updated to indicate the status of the first terminal, such as working properly, in service, compliant with the current standards, non-compliant with the current standards, and the like. The model or type device profile is updated based on the at least one third common characteristic determined at step 530.

Step 540 is performed if the payment service provider also stores separate mobile device profiles in addition to the terminal device profiles. At step 540, all or some of the mobile device profiles, associated with the mobile devices involved in the plurality of transactions, are updated based on the one or more first common characteristics determined at step 530. In some embodiments, step 540 is performed only if there is statistically significant data for a certain type/model of mobile devices.

At step 545, an update for a payment application installed on a subscribing mobile device for guiding a user of the mobile device concerning the proper use of the mobile device to conduct proximity mobile payment transactions is generated. The update is based on the updated device profile(s) associated with the first POS terminal and is used to update data corresponding to the updated device profile(s) stored at the subscribing mobile device. In this manner, the subscribing mobile device receives the most recent data concerning the first POS terminal and/or POS terminals of the same model/type as the first terminal and the payment application is enabled to provide a more precise guidance to the user when he or she conducts proximity mobile payment transactions at the first POS terminal (or at POS terminals of the same model/type as the first terminal).

In some embodiments, the update is transmitted to all of the subscribing mobile devices automatically. In other embodiments, the subscribing mobile devices are informed that the update is available, e.g., by a message, enabling the user of the mobile device to choose when to download and install the update.

Although the method 500 is described only with respect to the first and second terminals, the same principles are applicable when a significantly greater number of POS terminals are monitored. Further, the payment service provider does not necessarily receive the observational data in association with a particular POS terminal. Rather, in some embodiments, the subscribing mobile devices transmit to the payment service provider all observational data they captured and gathered, for example during a day. The payment service provider then sorts the received observational data in accordance to POS terminals, for example using the GPS locations associated with the payment transactions, IDs supplied by the mobile device concerning the payment transactions, and the like. After the observational data has been sorted, the method 500 proceeds to step 515. If there are more than one other POS terminal of the same type/model as the first POS terminal, at step 530 common characteristics for all or some of such terminals are compared to determine the at least one third common characteristic.

Also, the skilled person would appreciate the order of steps in method 500 may be altered (e.g., steps 520 and 525 may be performed after step 530), and not all steps are performed in all embodiments. For example, a particular service provider may focus on the monitoring service, and not provide the guidance service, and thus, step 545 would not be performed. Further, all or some of the steps of the method 500 may be repeated for a particular POS terminal or for a plurality of POS terminals. For example, in some embodiments, steps 535, 540, and 545 are performed only when the one or more common characteristics determined at step 515 and/or step 530 are statistically significant. In some embodiments, the update generated at step 545 encompasses a plurality of updates generated in association with plurality of POS terminals. Such updates may be generated periodically, e.g., once a week or when a sufficient amount of data has been accumulated.

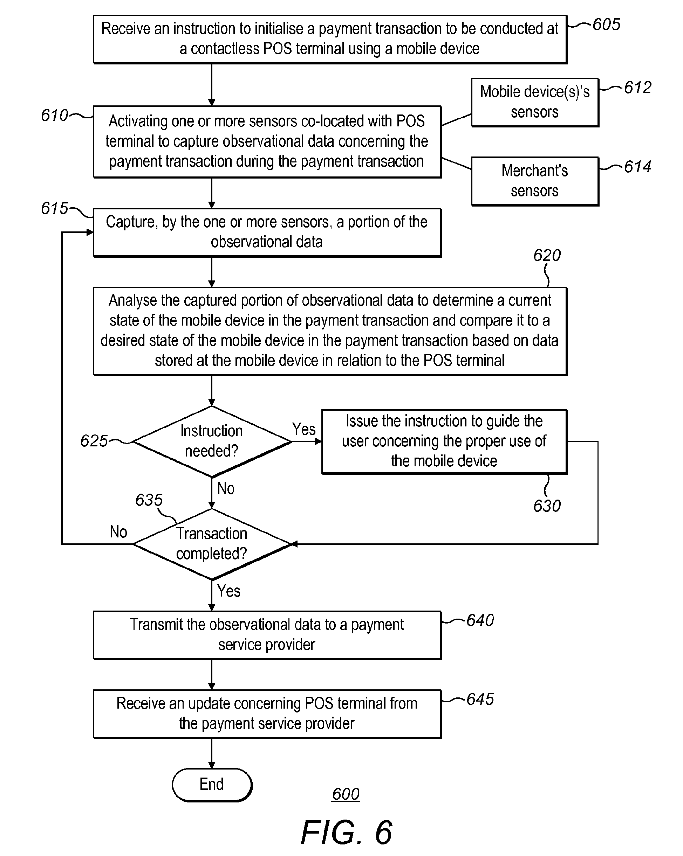

FIGURE 6 illustrates a flow diagram of a method 600 for monitoring and guiding proximity mobile payment transactions, according to some embodiments of the present disclosure. The method 600 starts with step 605 at which an instruction to initialise a payment transactions to be conducted at a contactless POS terminal using a mobile device is received.

In response to receiving the instruction, one or more sensors co-located with the POS terminal to capture observational data concerning the payment transaction during the payment transaction are activated at step 610. The one or more sensors include mobile device(s)'s sensors 612 and/or merchant's sensors 614. The merchant's sensors 614 are positioned such that the observational data related to the payment transaction as a whole is captured. For example, if the merchant's s sensors include a camera, the camera is positioned such that its field of view encompasses the POS terminal and some surrounding area for capturing both the POS terminal and the mobile device during the payment transaction. If the merchant's sensors include an audio sensor, then the audio sensor is positioned such as to be able to capture sounds emitted by the POS terminal and the mobile device during the transaction.

At step 615, a portion of the observational data is captured by the one or more sensors. In some embodiments, the portion of the observational data is defined in relation to time, e.g., one second. In some embodiments, the portion of the observational data is defined in relation to the type of captured data, e.g., by a number of video frames (or still images) captured, e.g., 10 video frames for video data. The skilled person would appreciate that if the captured portion of data is smaller, then the guidance provided to the user concerning the use of the mobile device is closer to a real-time feedback.

At step 620, the captured portion of observational data is analysed to determine a current state of the mobile device in the payment transaction. The current state of the mobile device generally represents positioning of the mobile device in relation to a reader field of the POS terminal. The current state is compared to a desired state of the mobile device. The desired state is determined based on data stored at the mobile device in association with the POS terminal (e.g., in the POS terminal device profile) and in relation to the current point in the payment transaction (e.g., the POS terminal started reading data from the mobile device).

If the current state does not generally match the desired state, an instruction to guide the user concerning the proper positioning of the mobile device is needed (step 625). At step 630, the instruction guiding the user concerning the proper use of the mobile device is issued. For example, if a distance between the mobile device and the terminal in the current state is greater than a distance between the mobile device and the terminal defined by the desired state, the instruction guides the user to bring the mobile device closer to the POS terminal. If the mobile device is displaced in relation to a reader field of the POS terminal in the current state in comparison to the desired state (e.g., the displacement in the current state is outside the range permitted by the desired state), the instruction guides the user concerning the direction in which the mobile device should be moved to align the mobile device with the reader field of the terminal. If a stationary time period of the mobile device in proximity to the reader field in the current state is shorter than a stationary time period defined by the desired state, and thus is insufficient to allow the POS terminal to complete the reading of the necessary data from the mobile device, the instruction guides the user to hold the mobile device stationary next to the reader field.

At step 635, a determination is made as to whether the transaction has been completed. If the payment transaction has not been completed, the method 600 returns to step 615 at which another portion of the observational data is captured. However, if the payment transaction has been completed, whether successfully or not, all portions of the observational data are prepared for transmission to the payment service provider. The observational data may be transmitted immediately following the completion of the payment transaction, or at a later time, for example, when the mobile device is in a Wi-Fi connection area. Further, as discussed above with respect to FIGURE 1, the portions of the observational data may be transmitted to the payment service provider as they being captured. In the terms of FIGURE 6 that would mean that step 640 is performed prior to step 635 and includes transmitting only the currently captured portion of the observational data.

At step 645, the mobile device receives an update concerning POS terminals from the payment service provider. As discussed in detail herein, the payment service provider analyses the observational data to determine particular features/characteristics associated with the POS terminals. Based on the results of such analysis, data concerning these POS terminals is updated and a respective update for the subscribing mobile device is generated. The update enables the mobile device to determine desired states of the mobile device during the payment transaction more precisely.

As shown in FIGURE 6, in some embodiments, the mobile device only captures the observational data, and no guidance is provided to the user during the proximity mobile payment transactions. In such embodiment, steps 620, 625, and 630 are omitted from the method 600. Further, although not shown in FIGURE 6, the user of the mobile device, in some embodiments, is provided with a user interface to submit an indication to the payment service provider that the POS terminal is possibly not working. For example, upon completion of the payment transaction at step 635, a determination can be made as to whether the payment transaction was successful. If the payment transaction was unsuccessful, a prompt inquiring whether to submit a service request for the POS terminal will be displayed. Alternatively, or additionally, the payment application may include a button for submitting a service request.

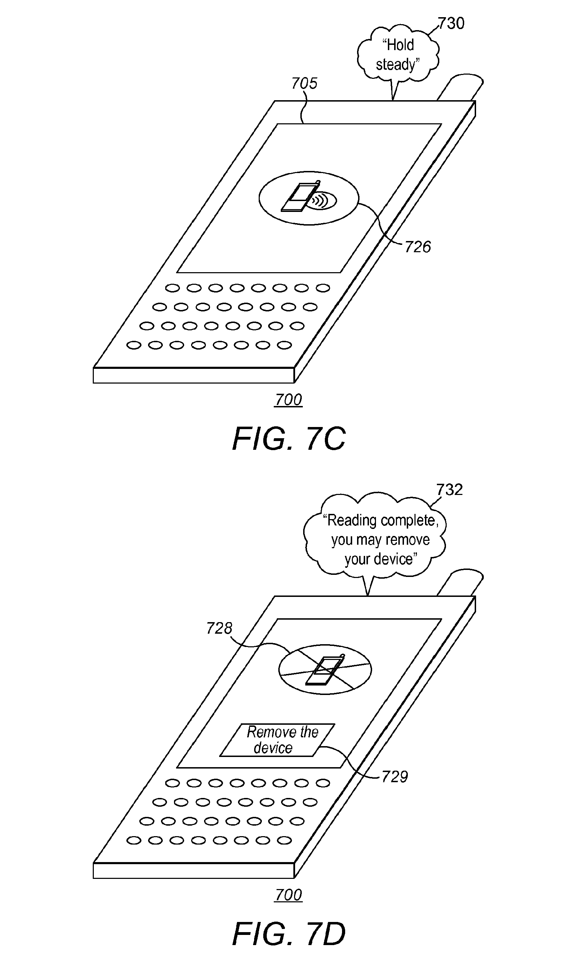

FIGURES 7A, 7B, 7C, and 7D depict examples of certain indicators provided at the mobile device to guide the consumer concerning the proper use of the mobile device during the proximity mobile payment transaction, according to some embodiments of the present disclosure. More specifically, FIGURE 7A depicts a mobile device 700 having a screen 705. As described above, in some embodiments, a camera of the mobile device is activated/initiated to capture video images in response to the initiation of the payment transaction. FIGURE 7A depicts the screen 705 outputting video images being captured by the camera of the mobile device. In particular, the screen 705 depicts a contactless POS terminal 710 the field of view of the camera. To guide the consumer concerning the proper placement of the mobile device 700, an image indicating such placement is superimposed on the video images captured by the camera. As shown, such an image can take the form of a rectangle 720 surrounding the contactless payment indicator 711 at the POS terminal 710.

FIGURE 7B shows another example of an indicator displayed on the screen 705 of the mobile device 700. In particular, the screen 705 displays a sign 722 in the form of an arrow pointing in which direction the mobile device should be moved to be properly positioned in relation to the POS terminal. The sign 722 is also accompanied by a text 724 indicating the movement direction, e.g., "move up."

FIGURE 7C shows the screen 705 displaying a sign 726 indicating that the mobile device should be held motionless, accompanied by an audio signal 730, in the form of a voice command "hold steady." FIGURE 7D shows the screen 705 displaying a sign 728 indicating that the mobile device may now be removed from the POS terminal, accompanied by an audio signal 732 in the form of a voice command "reading complete, remove the device."

The skilled person would appreciate that a variety of indicators may be used to guide the consumer during with the payment transaction, and particularly concerning the proper use of the mobile device. A single indicator or a combination of different indicators may be used at each guiding step. In some embodiments, only general instructions concerning the proper use of the particular POS terminal are displayed, regardless of whether the mobile device is used properly.

Although the methods and systems are described herein primarily in the context of the monitoring and assisting services being provided/facilitated by a payment service provider, the present disclosure is not limited to such implementations. Rather, some or all of the functions related to the monitoring and assisting services described herein can be performed by one of more other financial institutions, such as a merchant's bank, a consumer's bank, an acquirer (or other facilitator of payment transactions), cell service provider(s), and/or other service provider.

The methods and systems described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

The order of execution or performance of the operations in the embodiments illustrated and described herein is not essential, unless otherwise specified. That is, the operations/steps may be performed in any order, unless otherwise specified, and embodiments may include additional or fewer operations/steps than those disclosed herein. For example, a particular selected order of steps of methods described in relation to FIGURES 5 and 6 may depend on preferences and/or technical specifications of the payment transaction provider or any other party involved in monitoring and guiding of proximity mobile payment transactions. It is further contemplated that executing or performing a particular operation/step before, contemporaneously with, or after another operation is in accordance with the described embodiments.

While the invention has been described in terms of various specific embodiments, the skilled person would recognize that the invention can be practiced with modification within the spirit and scope of the claims.

## Claims

**1.** A computer-implemented method of monitoring proximity mobile payment transactions, the method comprising:
receiving, at a backend server, observational data concerning a plurality of proximity mobile payment transactions conducted at a contactless point of sale, POS, terminal using a plurality of mobile devices, wherein the observational data was captured during the plurality of proximity mobile payment transactions; and
analysing, at the backend server, the received observational data to determine one or more characteristics common to at least some of the plurality of proximity mobile payment transactions.

**2.** The method according to claim 1, wherein at least some of the observational data was captured by the plurality of mobile devices.

**3.** The computer implemented method according to either claim 1 or claim 2, wherein at least some of the observational data was captured by one or more sensor devices co-located with the POS terminal and separately from the plurality of mobile devices.

**4.** The method according to any of claims 1 to 3, further comprising:
determining, at the backend server, whether the POS terminal is functioning within predetermined operational parameters based on the one or more characteristics, and
generating automatically a request for servicing the POS terminal if it is determined that the POS terminal is not functioning within predetermined operational parameters.

**5.** The method according to any of claims 1 to 4, wherein the determination as to whether the POS terminal is functioning within predetermined operational parameters is performed by comparing data associated with the analysis of the one or more characteristics to corresponding parameter data stored in a device profile associated with the POS terminal.

**6.** The method according to any of claims 1 to 5, wherein:
the one or more characteristics comprise at least one of:
a presentation style of a mobile device in relation to the POS terminal;
a speed with which the mobile device is moved during a proximity mobile payment transaction;
a period of time during which the mobile device is held stationary next to a reader field of the POS terminal;
a placement of the mobile device in relation to the POS terminal;
an orientation of the mobile device during the proximity mobile payment transaction;
a location of the reader field on the POS terminal; and
an identity of the POS terminal, wherein the identity of the POS terminal comprises one or more of: an identification reference, a model, a type, an associated merchant, and a GPS location.

**6.** The method according to any of the preceding claims, further comprising:
updating a device profile associated with the POS terminal based on data associated with the analysis of the one or more characteristics.

**7.** The method according to claim 6, wherein the updating step further comprises:
comparing the data associated with the analysis of the one or more characteristics determined in association with the POS terminal with data associated with the analysis of another one or more characteristics determined in association with at least one another POS terminal to determine at least one characteristic common to proximity mobile payment transactions conducted at the POS terminal and the at least one another POS terminal; and
updating the device profile based on data associated with the analysis of the at least one characteristic common to the plurality of proximity mobile payment transactions conducted at the POS terminal and the at least one another POS terminal.

**8.** The method according to claim 6 or 7, further comprising:
generating, based on the updated device profile, an update for providing to a subscribing mobile device, having a payment application installed therein for guiding a user of the subscribing mobile device on how to conduct a proximity mobile payment transaction at one or more POS terminals associated with the device profile.

**9.** The method according to any of the preceding claims, wherein the analysing step comprises analysing the received observational data in conjunction with payment transaction data of the plurality of proximity mobile payment transactions.

**10.** A backend server comprising:
at least one processor; and
a memory storing instructions, which when executed by the at least one processor cause the backend server to perform the method according to any of the preceding claims.

**11.** A computer implemented method of monitoring proximity mobile payment transactions, the method comprising:
receiving, at a mobile device, an instruction to initialise a proximity mobile payment transaction to be conducted at a contactless point of sale, POS, terminal using the mobile device;
activating one or more sensors co-located with the POS terminal at the time of proximity mobile payment transaction for capturing observational data during the proximity mobile payment transaction; and
transmitting, from the mobile device, the observational data captured during the proximity mobile payment transaction concerning the proximity mobile payment transaction to a backend server for analysis.

**12.** The method according to claim 11, further comprising:
analysing, at the mobile device, a portion of the observational data to issue an instruction guiding a user of the mobile device concerning a proper use of the mobile device to conduct the proximity mobile payment transaction.

**13.** The method according to claim 12, wherein the analysing step comprises:
determining, based on the portion of the observational data, a current state of the mobile device in relation to the POS terminal; and
comparing the current state of the mobile device with a desired state of the mobile device to issue the instruction,
wherein the instruction is issued if the current state does fall within the desired state,
wherein the desired state defines the proper use of the mobile device at a point of the proximity mobile payment transaction when capturing of the first portion of the observational data was completed, and
wherein the instruction directs the user to move the mobile device from the current state toward the desired state;
wherein the desired state is determined based on one or more of: a device profile associated with the POS terminal or a mobile device profile associated with the mobile device.

**14.** A mobile device comprising:
one or more sensors configured to capture observational data concerning proximity mobile payment transactions conducted using the mobile device;
at least one processor; and
a memory storing instructions, which when executed by the at least one processor cause the mobile device to perform the method according to any of claims 11 to 13.

**15.** The mobile device according to claim 14, wherein the one or more sensors comprise one or more of a camera, a proximity sensor, an accelerometer, a gyroscopic sensor, an audio sensor, and a GPS sensor.
